# EUROPÄISCHE PATENTSCHRIFT

(11) **EP 1 523 952 B1**
(45) Veröffentlichungstag und Bekanntmachung des Hinweises auf die Patenterteilung: **27.12.2017**
(21) Anmeldenummer: 04019180.1
(22) Anmeldetag: 12.08.2004
(51) Int. Cl.: A61C 13/09

(54) **Zahnrestaurationsteil**
Dental restoration piece
Elément de restauration dentaire

(30) Priorität: 17.10.2003 DE 10348369
(43) Veröffentlichungstag der Anmeldung: 20.04.2005
(73) Patentinhaber: Ivoclar Vivadent AG, 9494 Schaan (LI)
(72) Erfinder: Foser, Hans-Peter, 9496 Balzers (LI); Spirig, Urs, 9496 Blazers (LI)
(74) Vertreter: Baronetzky, Klaus

(56) Entgegenhaltungen:
- DE-A1- 4 133 690
- DE-C1- 19 628 930
- FR-A- 2 577 796
- US-A- 4 398 887
- US-A- 4 828 117

## Beschreibung

Die Erfindung betrifft ein Zahnrestaurationsteil gemäß dem Oberbegriff von Anspruch 1 sowie ein Verfahren zur Herstellung eines Zahnrestaurationsteils, gemäß dem Oberbegriff von Anspruch 20.

Ein derartiges Zahnrestaurationsteil ist aus der DE 41 33 690 bekannt. Bei einer derartigen Lösung werden plastische Fertigteilkronen und Kauflächen verwendet, die als Ganzes auf einem Unterbau aufgebracht werden. Nach dem Aufbringen wird das plastische Halbzeug durch UV-Licht gehärtet, so dass es als korrigierte Kaufläche zur Verfügung steht. Derartige Kauflächen sind vergleichsweise weich. Zudem erfordert das Nachmodellieren der Kauflächen intensive Handarbeit, und das Ergebnis der Restauration hängt sehr von der Geschicklichkeit des Zahnarztes oder gegebenenfalls des Zahntechnikers ab, die gewünschte Höckerform bereitzustellen.

Ferner sind Fertigelemente für die Herstellung von Zahnersatz bereits bekannt geworden, beispielsweise aus der DE-C1-198 50 451. Diese Lösung ist für die Realisierung einer Prefacette geeignet, bei der ein Metallgerüst von einem Opaker abgedeckt wird und hierauf eine Schicht aus Dentinmaterial-Keramik aufgebracht wird. Die Prefacette legt hierbei exakt die Form der Schneide fest. Die dem Dentin nachgebildete Keramikschicht muss eine exakte Form haben, damit keine Ausrichtfehler entstehen. Durch das Aufbringen von zwei Schichten lässt sich zwar ein ästhetisch ansprechendes Ergebnis erzielen, jedoch ist hier eine recht genaue Bearbeitung erforderlich, um sicher zu vermeiden, dass Zahnstellungsfehler entstehen. DE 41 33 690 A1 offenbart ein Zahnrestaurationsteil und ein Verfahren zur Herstellung eines Zahnrestaurationsteils nach dem Oberbegriff von Ansprüchen 1 und 16.

US 5 314 335 A offenbart ein Kauelement, welches sich nach der Art einer Schürze nach unten erstreckt. Demgegenüber liegt der Erfindung die Aufgabe zu Grunde, ein Zahnrestaurationsteil gemäß dem Oberbegriff von Anspruch 1 sowie ein Verfahren zur Herstellung eines Zahnrestaurationsteils gemäß dem Oberbegriff von Anspruch 20 zu schaffen, die eine flexiblere Bedienung bei rascher Herstellung der Zahnrestauration ermöglichen, ohne dass handwerklich besondere Anforderungen gestellt würden.

Diese Aufgabe wird erfindungsgemäß durch die Ansprüche 1 und 16 gelöst. Vorteilhafte Weiterbildungen ergeben sich aus den Unteransprüchen.
Ein erfindungsgemäßes Zahnrestaurationsteil weist eine vorgegebene Kaufläche auf, die damit als vorgefertigtes Überbau-Teil herstellbar ist und damit preisgünstig in guter Qualität vorliegt.
Mit der Erfindung lässt sich in einfacher Weise eine Adaptierung und Feinjustierung der Zähne in der Okklusionsstellung gewährleisten, beispielsweise, indem in an sich bekannter Weise eine Ausrichtung im Artikulator vorgenommen wird. Die Innenkontur des Überbaus ist hierzu bevorzugt im Wesentlichen konkav ausgebildet, und die Außenkontur der Unterbaus ist in entsprechender Weise konvex ausgebildet. Auch wenn die betreffenden Konturen von einer halbkugligen und gleichförmigen Oberfläche deutlich abweichen, beispielsweise entsprechend der Form eines in üblicher Weise präparierten Zahnstumpfes, ergibt sich doch eine gute Möglichkeit der Feinjustierung, bereits auf Grund des erfindungsgemäß vorgesehenen Verbindungsmaterials, das den Spalt zwischen Innenkontur und Außenkontur abdeckt.
Wenn die Schichtstärke des Verbindungsmaterials beispielsweise 0,8 mm oder 1 mm beträgt, ist eine Justierung um beispielsweise 0,5 mm kein Problem, wobei es bevorzugt ist, dass der Überbau zunächst vergleichsweise lose aufgedrückt wird und die Feinjustierung durch weiteres "Nachdrücken" auf die Kaufläche - unter entsprechender Ausrichtung - erfolgt.

Erfindungsgemäß ist es auch günstig, dass man den betreffenden Antagonisten als Druck aufbringendes Element im Artikulator verwendet, da in dieser Weise sich automatisch eine Optimierung der Position ergibt.

Es versteht sich, dass auch beispielsweise der Benettwinkel berücksichtigt wird, und es ist ohne Weiteres möglich, mit einer vorgegebenen Anzahl von vorgefertigten Kauflächenelementen die in der Praxis vorkommenden Zahnformen abzudecken.

Erfindungsgemäß besonders günstig ist es darüber hinaus, dass das Verbindungsmaterial, das bevorzugt aus einem in-situ aushärtenden Kunststoff besteht, eine gewisse Dämpfungswirkung entfaltet, so dass der Verschleiß des Antagonisten auch bei Verwendung von Keramik für den Überbau geringer ist.

Erfindungsgemäß besonders günstig ist es, wenn ein Überbau mindestens einen Zahnstumpf einstückig abdeckt. Es ist auch möglich, den Überbau - gegebenenfalls unter Verwendung eines zusätzlichen Gerüsts - so auszugestalten, dass gleich mehrere Zahnstümpfe abgedeckt werden, wobei eine einstückige Ausgestaltung realisierbar ist.

Erfindungsgemäß lässt sich das Verbindungsmaterial in überraschend einfacher Weise vor Ort härten. Es ist möglich, eine Wärmehärtung für die Bereiche des Verbindungsmaterials vorzunehmen, die von dem Überbau abgedeckt sind. Hier kommt auch ein selbsthärtendes Kunststoffmaterial in Betracht.

Freiliegende Bereiche des Verbindungsmaterials, also Seitenbereiche des betreffenden Zahns, lassen sich auch mit einem lichthärtenden Kunststoffmaterial ausstatten. Dort, aber auch im Bereich der ästhetisch etwas weniger relevanten Kauflächen selbst, lässt sich der Unterbau gut mit einem Opaker versehen, so dass die erfindungsgemäße Lösung eine ästhetisch befriedigende Transluzenz bieten kann.

Überraschend ergeben sich trotz der Verwendung von mehreren verschiedenen Materialien, wie des Verbindungsmaterials und eines hiervon gegebenenfalls verschiedenen lichtpolymerisierbaren Kunststoffmaterials für den Seitenbereich, und damit trotz der unterschiedlichen Wärmeausdehnungskoeffizienten keine Randspalten. Durch die Schichtung unter Verwendung eines ersten Verbindungsmaterials für die Befestigung des Unterbaus auf diesem Verbindungsmaterial, eines zweiten Verbindungsmaterials für die Befestigung des Überbaus auf dem Unterbau, und schließlich durch den Überbau ergeben sich je vergleichsweise dünne Schichten mit entsprechend geringer Materialkontraktion. Das zeitaufwendige Brennen entfällt, was der Reduktion der Zykluszeit im Dentallabor zugute kommt.

Ein erfindungsgemäß hergestelltes Zahnrestaurationsteil lässt sich auch gut polieren, wobei die Materialwahl für den Überbau nicht auf Keramikmaterial beschränkt ist, nachdem beispielsweise auch Kunststoff, auch in vorgefertigter Form, zum Einsatz gelangen kann.

Erfindungsgemäß besonders günstig ist es, wenn das Kauelement sich spaltenfrei über die gesamte Mastikationsfläche erstreckt. Hierdurch ist eine stabile Restauration auch an den am stärksten beanspruchten Bereichen der Restauration gewährleistet.

Erfindungsgemäß ist es ferner günstig, dass durch die etwas elastische Schicht aus dem zusätzlichen Verbindungsmaterial auch Ermüdungsbrüche des Überbaus deutlich seltener auftreten, denn Druckspitzen, die durch die Mastifikation typischerweise in die Höckerflanken eingeleitet werden, werden erfindungsgemäß besser aufgefangen und vergleichmäßigt.

Erfindungsgemäß können entweder vergleichsweise hart eingestellte Kunststoffe oder beliebige Keramiken für den Überbau verwendet werden. So lässt sich eine Aluminiumoxidkeramik, eine Zirkonoxidkeramik oder eine Mischkeramik aus diesen oder weiteren Oxidkeramiken ohne Weiteres einsetzen.

Bei der Herstellung eines erfindungsgemäßen Zahnrestaurationsteils lässt sich bevorzugt mit einem gewissen Überschuss an Verbindungsmaterial arbeiten. Zunächst wird der Unterbau fertig konstruiert, beispielsweise mit einer Metalllegierung oder in Vollkeramik oder in beliebiger geeigneter Weise, angepasst an den Zahnstumpf, der zuvor präpariert wurde. Es wird ein Meistermodell aus Gips in konventioneller Weise abgeformt und hergestellt. Auf den Unterbau wird das Verbindungsmaterial in Überschuss aufgebracht. Das Verbindungsmaterial hat eine solche Viskosität, dass eine Verformung ohne Weiteres möglich ist, aber andererseits sich das Verbindungsmaterial nicht durch die Schwerkraft verformt.

Der Überbau ist mit einer Innenkontur ausgelegt, die größer als die Außenkontur des Unterbaus ist, aber zu dieser passt. Unter Belassung einer Restschicht von Verbindungsmaterial wird der Überbau auf den Unterbau aufgebracht und bevorzugt im Artikulator justiert. Der Überbau wird in das Verbindungsmaterial eingedrückt, und eine Feinjustierung wird in der gewünschten Weise vorgenommen. In dieser Position wird eine Aushärtung des Verbindungsmaterials eingeleitet. Dies kann bei selbsthärtenden Kunststoffmaterialien von alleine erfolgen, aber beispielsweise auch bei wärmepolymerisierbaren Kunststoffmaterialien durch Erwärmung. Der seitlich austretende Überschuss des Kunststoffmaterials wird entfernt, bevorzugt nach der Aushärtung. Es ist auch möglich, einen Teil des Überschusses vor der Aushärtung und einen Restteil nach der Aushärtung zu entfernen.

Mit der erfindungsgemäßen Lösung ergibt sich eine verbesserte Restaurationsqualität hinsichtlich der Bisssituation, trotz geringerer Herstellkosten und trotz verbesserter Zykluszeit.

Weitere Vorteile, Einzelheiten und Merkmale ergeben sich aus der nachfolgenden Beschreibung mehrerer Ausführungsbeispiele der Erfindung anhand der Zeichnungen.

Es zeigen:
- Fig. 1: eine perspektivische Ansicht eines Zahnsatzes, unter Darstellung eines bereits präparierten Zahnstumpfes in einer Ausführungsform;
- Fig. 2: eine vergrößerte Darstellung eines Ausschnitts aus Fig. 1;
- Fig. 3: die Darstellung gemäß Fig. 2, jedoch mit aufgebrachtem Unterbau;
- Fig. 4: die Darstellung gemäß Fig. 3, jedoch mit aufgebrachtem Überbau;
- Fig. 5: eine andere Ausführungsform der Erfindung mit einem modifizierten Überbau;
- Fig. 6: einen Schnitt durch ein erfindungsgemäßes Zahnrestaurationsteil;
- Fig. 7: eine modifizierte Ausführungsform eines Überbaus für ein erfindungsgemäßes Dentalrestaurationsteil;
- Fig. 8: einen Unterbau für die Ausführungsform gemäß Fig. 7;
- Fig. 9: eine weitere Ausführungsform eines Unterbaus anstelle des Unterbaus gemäß Fig. 8; und
- Fig. 10: eine vergrößerte Darstellung eines Ausschnitts aus Fig. 9.

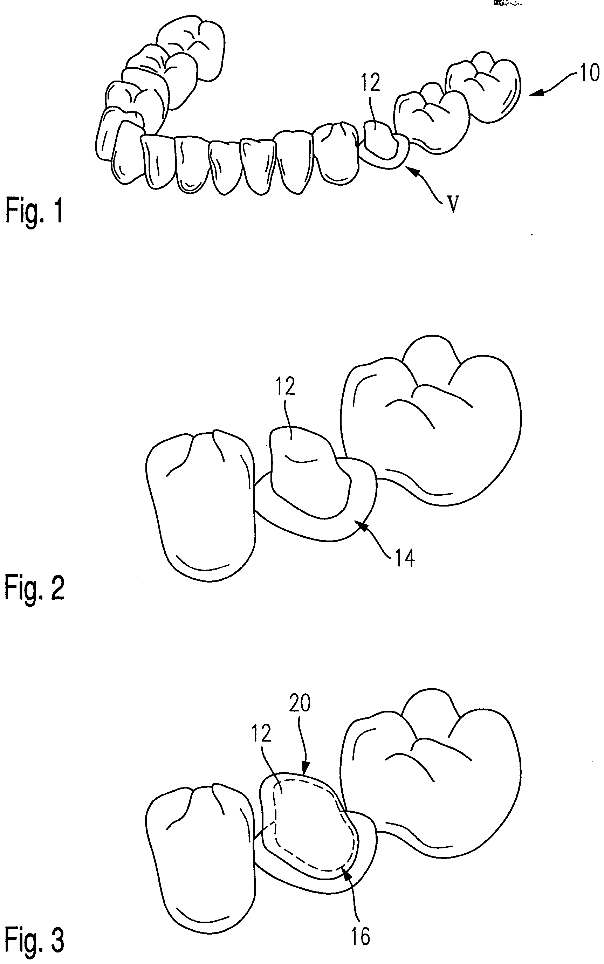

Fig. 1 zeigt in schematisierter Darstellung einen Zahnsatz 10 eines Unterkiefers, wobei ein Prämolar V zu einem Zahnstumpf 12 präpariert wurde.

Der Zahnstumpf 12 weist einen an sich bekannten Aufbau auf, wie er auch aus Fig. 2 in vergrößerter Darstellung ersichtlich ist, wobei sich Präparationsgrenzen 14 ergeben, die nach der Art eines Sockels ringförmig um den Zahnstumpf verlaufen.

Erfindungsgemäß ist es vorgesehen, ein besonderes Zahnrestaurationsteil auf dem Zahnstumpf 12 aufzubringen. Hierzu wird - wie es auch aus Fig. 3 ersichtlich ist - zunächst ein Unterbau 16 aus einem Metallgerüst, das mit einem nicht dargestellten Opaker verblendet ist, aufgebracht. Die Befestigung erfolgt mit einem an sich bekannten Verbindungsmaterial. Der Unterbau 16 hat eine im Wesentlichen gleichförmige Schichtstärke.

Der Unterbau 16 weist eine Außenkontur 20 auf, die im Wesentlichen der Außenkontur des Zahnstumpfs 12 entspricht, jedoch etwas runder und größer ist. Der Zahnstumpf 12 ist in Fig. 3 gestrichelt angedeutet.

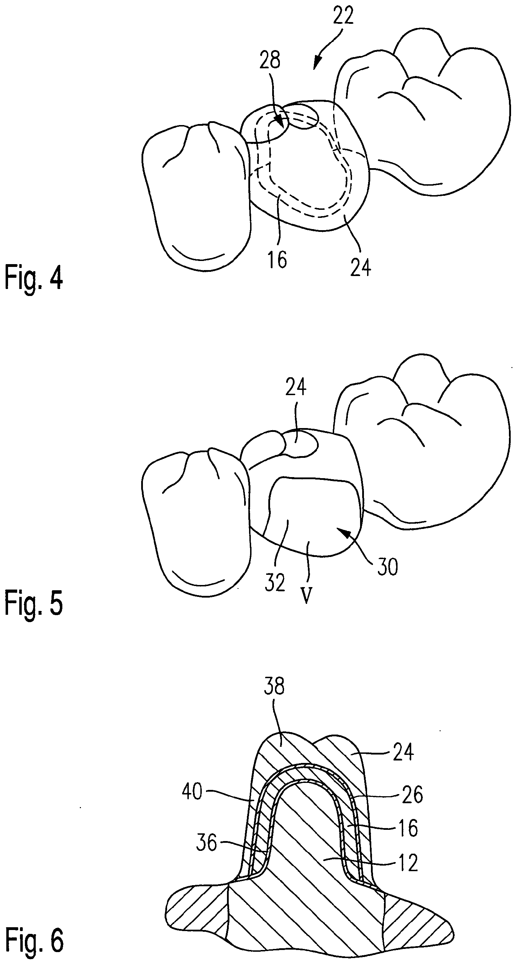

Fig. 4 zeigt demgegenüber eine Ausführungsform eines erfindungsgemäßen Zahnrestaurationsteils 22, nachdem der Überbau 24 angebracht ist. Hier ist der Unterbau 16 gestrichelt dargestellt, und es ist ersichtlich, dass der Unterbau 16 von dem Überbau 24 in dieser Ausführungsform vollständig abgedeckt wird. Der Überbau endet an den Präparationsgrenzen 14 (vgl. Fig. 2), und zwischen Überbau und Unterbau ist das aus Fig. 4 nicht ersichtliche Verbindungsmaterial 26 eingebracht, das den gesamten schichtförmigen Raum zwischen der Innenkontur des Überbaus 24 und der Außenkontur des Unterbaus 16 ausfüllt.

Um Lufteinschlüsse zu vermeiden, ist es vorgesehen, den Kontakt zwischen dem Verbindungsmaterial 26 und der Innenkontur des Überbaus 24 an der höchsten Stelle 28 beginnen zu lassen. Dort ist dementsprechend die Schichtstärke des verformbaren Verbindungsmaterial relativ groß, und es erfolgt eine Formanpassung während des Niederdrückens des Überbaus, bevorzugt im Artikulator.

Es versteht sich, dass die genaue Ausgestaltung insofern in weiten Bereichen an die Erfordernisse anpassbar ist. So ist es auch möglich, ein Kauelement für das Abdecken der Kaufläche vorzusehen, und dann anschließend hieran Seitenelemente, ebenfalls als vorgefertigte Teile, in das Verbindungsmaterial einzudrücken. Diese Ausgestaltung hat den Vorteil, dass eine noch etwas leichtere Winkelanpassung der Kaufläche möglich ist, wobei es sich versteht, dass zunächst die Winkelanpassung erfolgen sollte und anschließend hieran die Seitenelemente oberflächentreu, also bündig mit dem Kauflächenelement, angebracht werden sollten.

Fig. 5 zeigt eine modifizierte Ausgestaltung des Überbaus, bei welcher Seitenflächen 30 des Zahns V nicht von dem keramischen Überbau 24 abgedeckt sind. Bei dieser Ausführungsform ist an den Seitenflächen 30 dann ein Kunststoffmaterial, bevorzugt ein lichthärtendes Kunststoffmaterial 32, vorgesehen, das nach Aufbringen des Überbaus und nach Abschluss der Oberflächenbearbeitung, also Bereitstellung einer bündigen Oberfläche, gehärtet wird.

Das verwendete Verbindungsmaterial zwischen Unterbau und Überbau kann entweder ein wärmehärtbares Kunststoffmaterial, ein selbsthärtendes Kunststoffmaterial oder beispielsweise auch ein Zahnzement sein. Es versteht sich, dass das Kunststoffmaterial 32 bei Bedarf in gleicher Weise ausgebildet, also beispielsweise ebenfalls ein wärmehärtbares Kunststoffmaterial sein kann, dessen Oberfläche relativ verschleißfest ist.

Aus Fig. 6 ist eine Ausführungsform eines erfindungsgemäßen Zahnrestaurationsteils im Schnitt ersichtlich. Gleiche Bezugszeichen weisen hier wie auch in den weiteren Figuren auf gleiche Teile hin. Schematisch ist ersichtlich, dass zwischen dem Zahnstumpf 12 und dem Unterbau 16 ein weiteres Verbindungsmaterial 36 erfindungsgemäss vorgesehen ist. Der Überbau 24 gliedert sich in dem dargestellten Ausführungsbeispiel in den oberen Bereich, der das Kauelement 38 bildet, sowie in ein Verblendungselement 40, das sich nach der Art einer Schürze nach unten erstreckt. Bevorzugt ist die Erstreckung im mesialen und distalen Bereich des Zahns vorgesehen, nachdem dort die Zugänglichkeit recht beschränkt ist.
Erfindungsgemäß ist es bevorzugt, das Zahnrestaurationsteil nach seiner Fertigstellung, also nachdem eine perfekte Ausrichtung zwischen Unterbau und Überbau 16 und 24 erfolgt ist, einzupassen und hierzu das zweite Verbindungsmaterial 36 in an sich bekannte Weise einzusetzen.
In einer modifizierten Ausgestaltung ist es vorgesehen, anstelle des Unterbaus ein besonderes Befestigungsmaterial einzusetzen, das den Unterbau 16 bildet und dann den Überbau 24 unmittelbar auf dieses Verbindungsmaterial aufzusetzen. Diese Lösung ist besonders für kleinere Restaurationen geeignet und erlaubt es, das Wegpräparieren des Dentins auf das minimal erforderliche Maß zu beschränken.

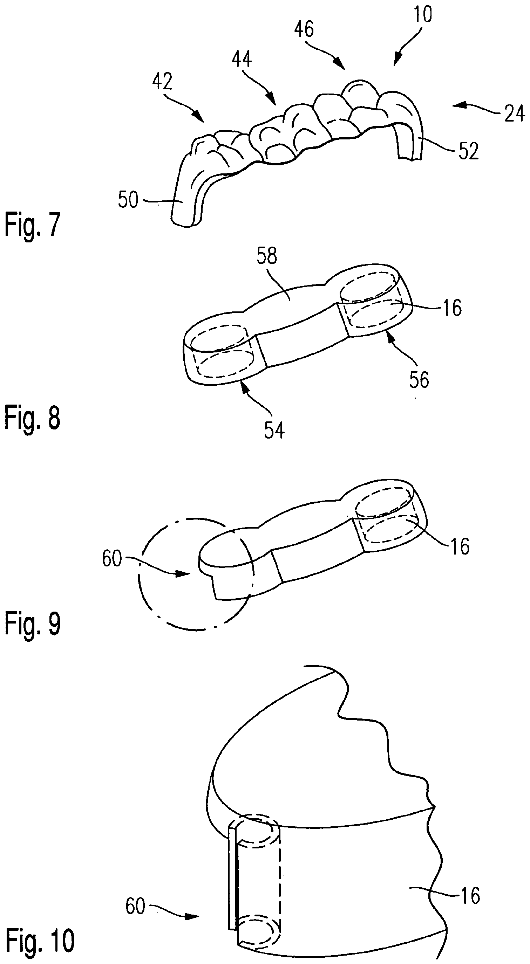

In den Figuren 4 bis 10 sind zwei Ausführungsformen eines erfindungsgemäßen Zahnrestaurationsteils 10 dargestellt, die sich für die Restauration mehrerer Zähne eignen. In Fig. 7 ist ein mehrgliedriger Überbau 24 dargestellt. Der Überbau 24 weist drei Kauelemente 42, 44 und 46 entsprechend den Zähnen IV, V und VI auf und ist insofern mehrgliedrig. An der mesialen Seite des Kauelements erstreckt sich eine Schürze 50 bis nach unten zur Präparationsgrenze, also an der Seitenflanke des Zahns IV, die zum Zahn III gewandt ist.
Eine Schürze 52 erstreckt sich an der distalen Seitenfläche des Zahns VI.

In dem dargestellten Ausführungsbeispiel sind die Kauelemente 42, 44 und 46 zueinander einstückig ausgebildet, ebenso wie die Schürzen 50 und 52. Es versteht sich, dass anstelle dessen auch ein mehrstückiger Aufbau der Kauelemente 42 bis 46 möglich ist.

Ein entsprechender Unterbau 16, der für die Aufnahme des Überbaus 24 gemäß Fig. 7 geeignet ist, ist in Fig. 8 dargestellt. Dieser Unterbau 16 weist zwei napfförmige Ausnehmungen 54 und 56 auf, die nach unten offen sind und entsprechend präparierte Zahnstümpfe aufnehmen können, in dem dargestellten Ausführungsbeispiel die Zahnstümpfe der Zähne IV und VI. Zwischen diesen Endbereichen ist ein Brückenbereich 58 ausgebildet, der das Kauelement 44 trägt.

Auch hier ist die Außenkontur des Unterbaus 16 an die Innenkontur des Überbaus 24 angepasst.

Eine modifizierte Ausführungsform des Unterbaus 16 ist aus Fig. 9 ersichtlich. Anstelle der Ausnehmung 54 ist eine Geschiebeausnehmung 60 vorgesehen, die für die Aufnahme eines Geschiebeelements, das hier nicht dargestellt ist, geeignet ist. Diese Ausgestaltung ist aus Fig. 10 ebenfalls in vergrößerter Darstellung ersichtlich. In an sich bekannter Weise ist die Geschiebeausnehmung 60 so ausgebildet, dass eine vertikale Entnahme möglich ist, aber ein sicherer Sitz gewährleistet ist. Dies kann beispielsweise durch eine entsprechende Konizität entlang der vertikalen Achse im Bereich der Geschiebeausnehmung 60 realisiert sein.

Anstelle des Verbindungsmaterials zur Befestigung des Überbaus 24 auf dem Unterbau 16 kann auch ein beliebiges geeignetes Verbindungselement, auch beispielsweise eine formschlüssige Verbindung zwischen Überbau und Unterbau, verwendet werden.

## Patentansprüche

1. Zahnrestaurationsteil, mit einem eingliedrigen oder mehrgliedrigen Unterbau (16) sowie einem diesen mindestens teilweise abdeckenden Überbau (24), welcher aus wenigstens einem vorgefertigten Kauelement (38) mit einer vorgegebenen Kaufläche besteht, wobei der Überbau (24) auf den Unterbau (16) über ein auf den Unterbau (16) aufgebrachtes, polymerisierbares Verbindungsmaterial (26) aufbringbar und gegenüber dem Unterbau (16) ausrichtbar ist, wobei der Unterbau (16) auf wenigstens einem Zahnstumpf (12) befestigbar ist und eine Innenkontur aufweist, die im Wesentlichen der Außenkontur des Zahnstumpfes (12) entspricht, wobei der Unterbau (16) auf den Zahnstumpf (12) über ein auf den Zahnstumpf (12) aufgebrachtes, polymerisierbares Verbindungsmaterial (36) aufbringbar ist, **dadurch gekennzeichnet, dass** der Überbau (24) eine auf die Außenkontur des Unterbaus (16) im Wesentlichen abgestimmte Innenkontur aufweist, wobei zwischen dem Überbau (24) und dem Unterbau (16) ein Spalt mit einer gleichen Breite ausgebildet ist, und wobei das Verbindungsmaterial (26) sich flächig zwischen Überbau (24) und Unterbau (16) erstreckt und insbesondere den Zwischenraum zwischen Überbau (24) und Unterbau (16) ausfüllt und wobei das wenigstens eine vorgefertigte Kauelement (38) ein, einen lingualen und/oder bukkalen und/oder mesialen und/oder distalen Bereich des Unterbaus (16) wenigstens teilweise abdeckendes Verblendungselement (40) aufweist, welches sich nach der Art einer Schürze nach unten erstreckt, das über das Verbindungsmaterial (26) mit dem Unterbau (16) verbunden ist.

2. Zahnrestaurationsteil nach Anspruch 1, **dadurch gekennzeichnet, dass** das Verbindungsmaterial (26) eine solche Viskosität aufweist, dass es durch die Schwerkraft nicht verformbar ist, wobei eine Verformung durch das Aufbringen des Überbaus realisierbar ist.

3. Zahnrestaurationsteil nach einem der vorhergehenden Ansprüche, **dadurch gekennzeichnet, dass** das Kauelement (38) sich, insbesondere einstückig, über die gesamte Mastikationsfläche des Zahns erstreckt.

4. Zahnrestaurationsteil nach einem der vorhergehenden Ansprüche, **dadurch gekennzeichnet, dass** das Verblendungselement (40) sich im Wesentlichen bis zur Präparationsgrenze erstreckt und insbesondere an der mesialen und distalen Seite des Zahns vorgesehen ist.

5. Zahnrestaurationsteil nach einem der vorhergehenden Ansprüche, **dadurch gekennzeichnet, dass** zumindest der von dem Überbau (24) nicht abgedeckte Bereich des Unterbaus (16) mit einem Opaker versehen ist.

6. Zahnrestaurationsteil nach einem der vorhergehenden Ansprüche, **dadurch gekennzeichnet, dass** der von dem Überbau (24) nicht abgedeckte Bereich des Unterbaus (16) von freiliegendem Verbindungsmaterial (26) abgedeckt ist.

7. Zahnrestaurationsteil nach einem der vorhergehenden Ansprüche, **dadurch gekennzeichnet, dass** der Überbau (24) aus Keramik und/oder Kunststoff besteht.

8. Zahnrestaurationsteil nach einem der vorhergehenden Ansprüche, **dadurch gekennzeichnet, dass** es sich bei der Keramik insbesondere um eine Aluminiumoxidkeramik, eine Zirkonoxidkeramik, eine Glaskeramik oder eine Mischung derselben handelt.

9. Zahnrestaurationsteil nach einem der vorhergehenden Ansprüche, **dadurch gekennzeichnet, dass** das Verbindungsmaterial (26) ein Kunststoff ist.

10. Zahnrestaurationsteil nach einem der vorhergehenden Ansprüche, **dadurch gekennzeichnet, dass** es sich bei dem Kunststoff um einen polymerisierbaren, insbesondere um einen lichthärtbaren oder in-situ härtbaren Kunstsoff handelt.

11. Zahnrestaurationsteil nach einem der vorhergehenden Ansprüche, **dadurch gekennzeichnet, dass** der Unterbau (16) ein Metallgerüst, ein Metall-Keramikgerüst, ein Keramikgerüst, ein Kunststoffgerüst und/oder ein Kunststoff-Glasfasergerüst ist.

12. Zahnrestaurationsteil nach einem der vorhergehenden Ansprüche, **dadurch gekennzeichnet, dass** das Zahnrestaurationsteil (10) für Prämolare und Molare bestimmt ist.

13. Zahnrestaurationsteil nach einem der vorhergehenden Ansprüche, **dadurch gekennzeichnet, dass** das Zahnrestaurationsteil wenigstens einen von mindestens einem Kauelement (38) gebildeten Höcker aufweist.

14. Zahnrestaurationsteil nach Anspruch 13, **dadurch gekennzeichnet, dass** der Überbau (24) den Unterbau (16) vollständig abdeckt.

15. Zahnrestaurationsteil nach einem der Ansprüche 1 bis 14, **dadurch geke nnzeichnet**, dass der Unterbau (16) auf wenigstens einem Stift oder mit Hilfe eines Geschiebes an wenigstens einem benachbarten Zahn im Munde des Patienten befestigbar ist.

16. Verfahren zur Herstellung eines Zahnrestaurationsteils außerhalb einem Mund eines Patienten, mit einem ein- oder mehrgliedrigen Unterbau (16) und einem mit dem Unterbau (16) verbindbaren ein- oder mehrgliedrigen Überbau (24), welcher aus wenigstens einem vorgefertigten Kauelement (38) mit einer vorgegebenen Kaufläche besteht, wobei zuerst ein Verbindungsmaterial (26) auf dem Unterbau (16) aufgebracht wird, danach ein Aufdrücken und eine Feinjustierung des Überbaus (24) auf das verformbare Verbindungsmaterial (26), welches im noch nicht ausgehärteten Zustand ist, erfolgt und anschließend eine Aushärtung des Verbindungsmaterials (26) unter Einwirkung einer Fremdenergie, erfolgt, wobei der Unterbau (16) auf wenigstens einem Zahnstumpf (12) befestigbar ist und eine Innenkontur des Unterbaus (16) und eine Außenkontur des Zahnstumpfes (12) aneinander anpassbar sind, wobei der Unterbau (16) auf den Zahnstumpf (12) über ein auf den Zahnstumpf (12) aufbringbares, polymerisierbares Verbindungsmaterial (36) aufbringbar ist, **dadurch gekennzeichnet, dass** die Innenkontur des Überbaus (24) und die Außenkontur des Unterbaus (16) aneinander angepasst und so bemessen werden, dass zwischen dem Überbau (24) und dem Unterbau (16) ein Spalt mit einer im Wesentlichen gleichen Breite verbleibt, in welchem das Verbindungsmaterial (26) aufgenommen wird, wobei das Verbindungsmaterial (26) sich flächig zwischen Überbau (24) und Unterbau (16) erstreckt und insbesondere den Zwischenraum zwischen Überbau (24) und Unterbau (16) ausfüllt und wobei ein Verblendungselement (40) des wenigstens einen vorgefertigten Kauelements (38) einen lingualen und/oder bukkalen und/oder mesialen und/oder distalen Bereich des Unterbaus (16) wenigstens teilweise abdeckt, welches sich nach der Art einer Schürze nach unten erstreckt, das über das Verbindungsmaterial (26) mit dem Unterbau (16) verbunden wird.

17. Verfahren nach Anspruch 16,
**dadurch gekennzeichnet, dass** es sich bei der Fremdenergie um Licht und/oder Wärme und/oder Druck handelt.

18. Verfahren nach Anspruch 16 oder 17,
**dadurch gekennzeichnet, dass** vor dem Aufbringen des Verbindungsmaterials (26) auf dem Unterbau (16) der Unterbau (16) wenigstens teilweise mit einem Opaker versehen wird.

19. Verfahren nach einem der Ansprüche 16 bis 18,
**dadurch gekennzeichnet, dass** der Unterbau (16) vor dem Aushärten des Verbindungsmaterials (26) mit einer Prüfvorrichtung zusammengebracht, insbesondere in einen Artikulator eingesetzt und der Überbau (24) gegenüber dem Unterbau (16) hinsichtlich der Bisssituation ausgerichtet wird.

20. Verfahren nach einem der Ansprüche 16 bis 19,
**dadurch gekennzeichnet, dass** nach dem Aushärten des Verbindungsmaterials (26) der von dem Überbau (24) nicht abgedeckte Bereich des Unterbaus (16) mit weiterem freiliegenden polymerisierbaren Verbindungsmaterial (36) oder Verblendungsmaterial abgedeckt wird.

21. Verfahren nach einem der Ansprüche 16 bis 20,
**dadurch gekennzeichnet, dass** beim Aufdrücken des Überbaus (24) auf den Unterbau (16) entstehender Überschuss des Befestigungsmaterials (26) vor dessen Aushärten entfernt wird.

22. Verfahren nach einem der Ansprüche 16 bis 21,
**dadurch gekennzeichnet, dass** beim Aufdrücken des Überbaus (24) auf den Unterbau (16) entstehender Überschuss des Befestigungsmaterials (26) nach dessen Aushärten entfernt wird.

## Claims

1. A dental restoration element having a single-member or multiple-member substructure (16) and a superstructure (24) at least partly covering the substructure (16), which superstructure (24) consists at least in part of at least one prefabricated masticatory element (38) with a defined masticatory surface,
wherein the superstructure (24) is applicable to the substructure (16) by means of a polymerizable bonding material (26) that can be applied to the substructure (16) and aligned with the substructure (16), wherein the substructure (16) can be fastened to at least one tooth stump (12) and comprises an interior contour which substantially matches the outer contour of the tooth stump (12), wherein the substructure (16) can be applied to the tooth stump (12) by means of a polymerizable bonding material (36) applicable to the tooth stump (12), **characterized in that** the superstructure (24) comprises an interior contour that is substantially adapted to the exterior contour of the substructure (16) wherein a gap of the same width is formed between the superstructure (24) and the substructure (16), and wherein the bonding material (26) extends flatly between the superstructure (24) and the substructure (16) and in particular fills the interspace between the superstructure (24) and the substructure (16), and wherein the at least one prefabricated masticatory element (38) comprises a facing element (40) at least partly covering a lingual and/or buccal and/or mesial section of the substructure (16), which facial element (40) extends downward in the manner of an apron and is connected with the substructure (16) via the bonding material (26).

2. The dental restoration element according to Claim 1, **characterized in that** the viscosity of the bonding material (26) is such that it is not deformable by the force of gravity, whereas deformation can be accomplished when the superstructure is applied.

3. The dental restoration element according to one of the preceding claims, **characterized in that** the masticatory element (38) extends, particularly in one piece, across the entire masticatory surface of the tooth.

4. The dental restoration element according to one of the preceding claims, **characterized in that** the facing element (40) extends substantially as far as the preparation limit and is provided in particular on the mesial and distal side of the tooth.

5. The dental restoration element according to one of the preceding claims, **characterized in that** at least that sector of the substructure (16) which is not covered by the superstructure (24) is provided with an opacifier.

6. The dental restoration element according to one of the preceding claims, **characterized in that** the section of the substructure (16) that is not covered by the superstructure (24) is covered by exposed bonding material (26).

7. The dental restoration element according to one of the preceding claims, **characterized in that** the superstructure (24) is made of ceramic and/or plastic material.

8. The dental restoration element according to one of the preceding claims, **characterized in that** the ceramic material is in particular aluminum oxide ceramics, zirconium oxide ceramics, glass ceramics or a mixture thereof.

9. The dental restoration element according to one of the preceding claims, **characterized in that** the bonding material (26) is a plastic material.

10. The dental restoration element according to one of the preceding claims, **characterized in that** the plastic material is a polymerizable plastic, in particular a light-curing or in-situ curing plastic material.

11. The dental restoration element according to one of the preceding claims, **characterized in that** the substructure (16) is a metal framework, a metal/ceramic framework, a ceramic framework, a plastic framework and/or a plastic/glass fibre framework.

12. The dental restoration element according to one of the preceding claims, **characterized in that** the dental restoration element (10) is meant for premolars and molars.

13. The dental restoration element according to one of the preceding claims, **characterized in that** the dental restoration element comprises at least one cusp formed by at least one masticatory element (38).

14. The dental restoration element according to Claim 13, **characterized in that** the superstructure (24) completely covers the substructure (16).

15. The dental restoration element according to one of Claims 1 to 14, **characterized in that** the substructure (16) can be fastened on at least one pin or with the help of a "pushing means" on at least one adjacent tooth in the patient's mouth.

16. A process of producing a dental restoration element outside the mouth of a patient, with a single-member or multiple-member substructure (16) and a single-member or multiple-member superstructure (24) combinable with the substructure (16) and comprising at least one prefabricated masticatory element (38) with a defined masticatory surface, wherein at first, a bonding material (26) is applied to the substructure (16), then the superstructure (24) is pressed onto the deformable bonding material (26) and finely adjusted while the material is not yet cured, and subsequently the bonding material (26) is cured by means of applying external energy, wherein the substructure (16) can be fastened to at least one tooth stub (12), and wherein an interior contour of the substructure (16) and an external contour of the tooth stub (12) can be fitted to each other, wherein the substructure (16) can be attached to the tooth stub (12) by means of a polymerizable bonding material (36) **characterized in that** the interior contour of superstructure (24) and the exterior contour of substructures (16) are fitted to each other and dimensioned such that between superstructure (24) and substructure (16) a gap of substantially the same width remains in which the bonding material (26) is placed, wherein the bonding material (26) extends flatly between superstructure (24) and substructure (16) and in particular fills the interspace between superstructure (24) and substructure (16), and wherein a facing element (40) of the at least one prefabricated masticatory element (38) covers at least partly a lingual and/or buccal and/or mesial and/or distal section of the substructure (16) which extends downward in the manner of an apron and is connected with the substructure (16) by means of bonding material (26).

17. The process according to Claim 16, **characterized in that** the external energy is light and/or heat and/or pressure.

18. Process according to Claim 16 or 17, **characterized in that** before the bonding material (26) is applied to substructure (16), the substructure (16) is at least partly provided with an opacifier.

19. The process according to one of Claims 16 to 18, **characterized in that** before the bonding material (26) is cured, substructure (16) is subjected to a testing means, in particular is placed inside an articulator, and superstructure (24) is aligned in relation to substructure (16) in consideration of the bite situation.

20. The process according to one of Claims 16 to 19, **characterized in that** after the bonding material (26) is cured, the section of the substructure (16) that is not covered by the superstructure (24) is covered with more of the exposed polymerizable bonding material (36) or with facing material.

21. The process according to one of Claims 16 to 20, **characterized in that** any excess of the fastening material (26) that is formed when the superstructure (24) is pressed onto substructure (16) is removed prior to it being cured.

22. The process according to one of Claims 16 to 21, **characterized in that** any excess of fastening material (26) that is formed when the superstructure (24) is pressed onto substructure (16) is removed after it is being cured

## Revendications

1. Pièce de restauration dentaire, avec une sous-structure (16) en une seule section ou en plusieurs sections, ainsi que une superstructure (24) couvrant au moins partiellement celle-ci, qui est composée d'au moins un élément de mastication (38) préfabriqué avec une surface de mastication prédéfinie, où la superstructure (24) peut être déposée sur la sous-structure (16) par un matériel de fixation polymérisable (26) appliqué sur la sous-structure (16) et peut être dirigée sur la sous-structure (16), où la sous-structure (16) peut être attachée sur au moins un moignon de dent (12) et possède un contour intérieur, qui correspond essentiellement au contour extérieur du moignon de dent (12), où la sous-structure (16) peut être attachée au moignon de dent (12) par un matériel de fixation polymérisable (36) appliqué sur le moignon de dent (12), **caractérisée en ce que** la superstructure (24) possède un contour intérieur essentiellement assorti au contour extérieur de la sous-structure (16), où entre la superstructure (24) et la sous-structure (16) un écart est formé avec une largeur substantiellement constante, et où le matériel de fixation (26) s'étend sur la surface entre la superstructure (24) et la sous-structure (16) et en particulier remplit l'écart entre la superstructure (24) et la sous-structure (16) et où ledit au moins un élément de mastication préfabriqué (38) possède un élément cosmétique (40) couvrant au moins partiellement la zone linguale et/ou buccale et/ou mésiale et/où distale de la sous-structure (16), qui s'étend comme un tablier vers le bas, qui est attaché à la sous-structure (16) par le matériel de fixation (26).

2. Pièce de restauration dentaire selon la revendication 1, **caractérisée en ce que** le matériel de fixation (26) possède une telle une viscosité, qu'il n'est pas déformable par la gravité, où une déformation peut être obtenue par l'application de la superstructure.

3. Pièce de restauration dentaire selon l'une des revendications précédentes, **caractérisée en ce que** l'élément de mastication (38), s'étend en particulier comme partie intégrante, sur toute la surface de mastication de la dent.

4. Pièce de restauration dentaire selon l'une des revendications précédentes, **caractérisée en ce que** l'élément cosmétique (40) s'étend essentiellement à la limite de préparation et est fourni en particulier du côté mésial et distal de la dent.

5. Pièce de restauration dentaire selon l'une des revendications précédentes, **caractérisée en ce qu'**au moins la zone de la sous-structure (16) non couverte par la superstructure (24) est recouverte d'un opaque.

6. Pièce de restauration dentaire selon l'une des revendications précédentes, **caractérisée en ce que** la zone de la de la sous-structure (16) non couverte par la superstructure (24) est couverte de matériel de fixation (26) exposé.

7. Pièce de restauration dentaire selon l'une des revendications précédentes, **caractérisée en ce que** la superstructure (24) est en céramique ou en plastique.

8. Pièce de restauration dentaire selon l'une des revendications précédentes, **caractérisée en ce qu'**il s'agit en particulier d'une céramique à base d'oxyde d'aluminium, une céramique à base d'oxyde de zirconium, en vitrocéramique ou un mélange de ceux-ci.

9. Pièce de restauration dentaire selon l'une des revendications précédentes, **caractérisée en ce que** le matériel de fixation (26) est une matière plastique.

10. Pièce de restauration dentaire selon l'une des revendications précédentes, **caractérisée en ce qu'**il s'agit en particulier d'une la matière plastique polymérisable, en particulier à une matière en plastique photodurcissable ou durcissable in situ.

11. Pièce de restauration dentaire selon l'une des revendications précédentes, **caractérisée en ce que** la sous-structure (16), est une armature métallique, une armature métallo-céramique, une armature en plastique ou une armature en fibre de verre.

12. Pièce de restauration dentaire selon l'une des revendications précédentes, **caractérisée en ce que** la pièce de restauration dentaire (10) est prévu pour des prémolaires et des molaires.

13. Pièce de restauration dentaire selon l'une des revendications précédentes, **caractérisée en ce que** la pièce de restauration dentaire possède au moins un bossage formé parmi au moins un élément de mastication (38).

14. Pièce de restauration dentaire selon l'une des revendications précédentes, **caractérisée en ce que** la superstructure (24) couvre entièrement la sous-structure (16).

15. Pièce de restauration dentaire selon l'une des revendications précédentes, **caractérisée en ce que** la sous-structure (16) peut être attachée à au moins une dent voisine dans la bouche du patient sur une tige ou à l'aide d'une fixation.

16. Procédé de fabrication d'une pièce de restauration dentaire à l'extérieur de la bouche d'un patient avec une sous-structure (16) en une seule section ou en plusieurs sections et avec une superstructure (24) en une seule section ou en plusieurs sections connectable à la sous-structure (16), qui est composée d'au moins un élément de mastication (38) préfabriqué avec une surface de mastication prédéfinie, où d'abord un matériel de fixation (26) est appliqué sur la sous-structure (16), suivi d'un pressage et un réglage précis de la superstructure (24) sur le matériel de fixation déformable (26), dans son état pas encore durci, et à continuation un durcissage du matériel de connexion (26) sous l'influence d'une énergie externe, où la sous-structure (16) peut être attachée sur le moignon de dent (12) et un contour intérieur de la sous-structure (16) et un contour extérieur du moignon de dent (12) sont adaptables ensemble, où la sous-structure (16) peut être attachée au moignon de dent (12) par un matériel de fixation polymérisable (36) applicable sur le moignon de dent (12), **caractérisé en ce que** le contour interne de la superstructure (24) et le contour externe de la sous-structure (16) sont adaptés et dimensionnés tels qu'un écart avec une largeur substantiellement constante reste entre la superstructure (24) et la sous-structure (16), dans lequel le matériel de fixation (26) est accueilli, où le matériel de fixation (26) s'étend sur toute la surface entre la superstructure (24) et la sous-structure (16) et en particulier remplit l'espace entre la superstructure (24) et la sous-structure (16) et où un élément cosmétique dudit au moins un élément de mastication (38) préfabriqué couvre au moins partiellement la zone linguale et/ou buccale et/ou mésiale et/où distale de la sous-structure (16), qui s'étend comme un tablier vers le bas, qui est attaché à la sous-structure (16) par le matériel de fixation (26).

17. Procédé selon la revendication 16, **caractérisé en ce que** la source d'énergie externe est de la lumière et/ou de la chaleur et/ou de la pression.

18. Procédé selon la revendication 16 ou 17, **caractérisé en ce qu'**avant d'appliquer le matériel de fixation (26) sur la sous-structure (16), la sous-structure est au moins partiellement recouverte d'un opaque.

19. Procédé selon l'une des revendications 16 à 18, **caractérisé en ce qu'**avant le durcissement du matériel de fixation (26) la sous-structure (16) entre en contact avec un dispositif d'inspection, en particulier est inséré dans un articulateur et la superstructure (24) est alignée par rapport la sous-structure (16) pour contrôler la capacité de mordre.

20. Procédé selon l'une des revendications du 16 au 19, **caractérisé en ce qu'**après le durcissement du matériel de fixation (26) la zone de la sous-structure (16) non couverte par la superstructure (24) est couverte de matériel de fixation (36) polymérisable supplémentaire exposé ou du matériel de revêtement.

21. Procédé selon l'une des revendications 16 à 20, **caractérisé en ce que**, lorsque la superstructure, (24) s'appuie sur la sous-structure (16) l'excès de matériel de fixation (26) survenant est enlevé avant son durcissement.

22. Procédé selon l'une des revendications 16 à 21, **caractérisé en ce que**, lorsque la superstructure, (24) s'appuie sur la sous-structure (16) l'excès de matériel de fixation (26) survenant sera supprimé après son durcissement.
